# EUROPEAN PATENT APPLICATION

(11) **EP 4 282 598 A1**
(43) Date of publication of application: **29.11.2023**
(21) Application number: 22700861.2
(22) Date of filing: 20.01.2022
(51) Int. Cl.: B25J 5/02, B25J 9/00, B25J 21/00, B65B 3/00, B65B 55/02, B65B 7/28, B65B 57/04

(54) **MACHINE FOR THE PREPARATION OF PHARMACEUTICAL PRODUCTS**

(30) Priority: 22.01.2021 EP 21382057
(71) Applicant: Grifols Worldwide Operations Limited, Dublin 22 (IE)
(72) Inventor: BOIRA BONHORA, Jordi, 08150 Parets Del Valles (Barcelona) (ES); ROURA SALIETTI, Carlos, 08150 Parets Del Valles (Barcelona) (ES)
(74) Representative: Durán-Corretjer, S.L.P.
(86) International application number: PCT/IB2022/050473
(87) International publication number: WO 2022/157660

(57) **Abstract**

Machine for the preparation of pharmaceutical products in a sterile environment, said machine comprising at least two stations of a line for preparing pharmaceutical products and automatic transport means for containers of pharmaceutical products, wherein the machine comprises a robot positioned inside the machine and robot control means, said robot being a robotic arm which comprises movement means for accessing the stations of the machine.

## Description

The present invention relates to a machine for the preparation of pharmaceutical products.

In the field of pharmaceutical product preparation, correct sterilisation of both said pharmaceutical products and the packages or containers containing said products is necessary in order to prevent or minimise contamination thereof, whether by particles (dust, pollen, skin, etc.) of different sizes or by microorganisms or the like.

Accordingly, the various steps in the process of preparing pharmaceutical products in which containers of products subject to final sterilisation are present must be carried out in a clean, sterile and/or aseptic environment. These steps are therefore carried out in clean rooms, that is, rooms designed to maintain extremely low levels of particles, such as dust, organisms in suspension or vaporised particles.

At times, clean rooms do not offer a sufficient level of cleanliness, or make achieving and maintaining the necessary level of cleanliness very complicated and costly. The use of machines for the preparation of pharmaceutical products having a sterile environment inside, and which have an adequate level of cleanliness for sterilising containers, is therefore becoming ever more widespread in the industry. In these clean environments, white rooms usually have, among others, strictly controlled environmental parameters relating to particulates in suspension, temperature, humidity, airflow, interior air pressure, lighting, etc.

At present many types of machine are used in the process of preparing or producing pharmaceutical products, such as pharmaceutical preparation devices (also known as pharmacy compounding devices), isolators, rapid transfer ports, sterile container filling systems, autoclaves, or other machines with similar characteristics.

These machines should be understood as devices that are closed by physical barriers (walls, etc.) and also generally by aerodynamic barriers (high or low pressure of the interior relative to the exterior thereof), so that the interior of said machines is completely isolated from the exterior, thus preventing possible contaminants from entering or leaving the interior, depending on whether the "clean" or "dirty" environment is inside or outside the isolator. These machines are normally used to maintain on the inside the necessary sterility and cleanliness requirements for the process that is to be carried out, without the enclosure in which said machines are positioned requiring the same level of enclosure cleanliness classification as said machines.

Consequently, the steps for producing packages for pharmaceutical products are carried out in aseptic devices or machines, working in a sterile environment so as not to contaminate the medicines.

Normally, one or more steps of the process of producing pharmaceutical products, including filling, bottling, preparing, compounding, capping or stoppering, encapsulating, transporting, sterilising, etc. the containers that contain said pharmaceutical products, are carried out on said machines. More specifically, each step is carried out at a station inside the aseptic machine. Furthermore, said machines comprise more than one station in their interior, such that two or more processes for the package production are carried out on the same machine. Generally, it is understood that machines for the preparation of pharmaceutical products comprise the production line or preparation line inside said machines. In a typical configuration, the containers first pass through a device for cleaning, by washing. The containers are then sent to a sterilisation device where said containers are sterilised. Next, the containers are transported to a filling machine where said containers are filled aseptically.

Also known in the prior art are aseptic machines for the process of preparing or producing pharmaceutical products which comprise two or more stations inside, possibly having an entire pharmaceutical product production and/or preparation line in the same machine. This type of machine for the preparation of pharmaceutical products in a sterile environment, with particular attention to those that comprise two or more stations in the same preparation line, comprise a wide variety of objects and equipment inside, among which feature the containers or vials used for packing, filling, treating, compounding or preparing pharmaceutical or medicinal products.

Although the operators who work with machines of this type are usually highly qualified and properly protected against contamination both by dust and microorganisms, it is not possible for people or their limbs (for example, arms and hands) to be present inside said machines.

A drawback of known machines in a sterile environment is that when a problem or malfunction occurs, such as a blockage in the production and/or preparation line, a container falling on the floor, a container being badly positioned, etc., the operator must enter the machine to solve the problem, which entails a risk of contaminating the containers. Because of the nature of the products worked with, if an operator enters the machine, said machine must be stopped, the incident must be resolved and the machine must be sterilised again before going back into operation. Moreover, all the containers on the preparation line must be discarded which means that a large number of containers have to be thrown away. As the pharmaceutical products worked with are very expensive, the withdrawal of an entire preparation line leads to great economic loss. In addition, the equipment must be stopped, repaired and sterilised before returning to operation.

In the event of a problem inside the machine, it is therefore desirable for the operator to solve said problem without entering said area. Machines for working in a sterile area are usually equipped with one or more gloves connected to the external structure thereof which allow an operator to work inside the machine and pick up fallen or badly positioned containers, without "breaking" the isolation barrier. These gloves require the presence of the user operating said gloves and cannot be controlled remotely. Moreover, said gloves have a limited range and operation thereof may be hazardous.

Other types of manual controls are known, such as using slides, as disclosed for example in Patent application PCT WO2007113660 A in an embodiment of a device for packing pharmaceutical products in a sterile environment. Said embodiment contains a machine (a robot) which allows portions of the device to be changed, the machine being able to move around the preparation line.

Robots for carrying out operations inside a machine for the preparation of pharmaceutical products are known, such as that described in Chinese Patent CN108994812 A, which discloses a robot that can patrol automatically through a system for producing pharmaceutical products and which incorporates a camera through which information on the operational state of the equipment can be obtained and adjustments made to said equipment.

Robotic arms are also known that allow containers to be transported from one station to another on the same production and/or preparation line.

The use of an interface to control a robot is also known. Accordingly, Patent application PCT WO2019029858 A discloses a robot for packing beverages in a clean area which, in one embodiment, is controlled manually via an interface positioned outside the clean area. However, this robot has the drawback of not being able to work inside the production lines.

An object of the present invention is to disclose a machine for working in a clean area, comprising in its interior a movable robot, specifically a robotic arm, which is able to pick up fallen or badly positioned containers without the operator having to come in direct contact with the interior of the machine, thus preventing machine contamination and downtime as said robot has non-manual control. A further object of the present invention is that the robot of the machine is able to act on the entire production line or preparation line, and is also able to work parallel to a production line that has means of transport between stations that are not robotic arms.

Another object of the present invention is to disclose a machine for the preparation of pharmaceutical products that comprises means for controlling the robot in an effective and convenient way for the user, via an interface or virtual reality systems that replace all or the greatest possible number of operations normally carried out by manual methods or means such as gloves controlled from the outside.

More specifically, the present invention discloses a machine for the preparation of pharmaceutical products in a sterile environment, said machine comprising at least two stations of a line for preparing pharmaceutical products and automatic transport means for containers of pharmaceutical products, with the particular feature that the machine comprises a robot positioned inside the machine and robot control means, said robot being a robotic arm which comprises movement means for accessing the stations of the machine.

Preferably, the robot is positioned inside the machine. Preferably, the robot is positioned parallel to the sterile preparation line, production line or work line of the machine.

The robot according to the present invention comprises movement means for accessing the stations of the machine, and is able to work on different stations and preferably on all the stations inside the machine. Preferably, the robot comprises movement means for accessing any point inside the machine. Being positioned parallel to the preparation line and being able to act on different stations, the robot may be used to carry out adjustments, pick up fallen or badly positioned containers, and overcome other types of problems. Moreover, said robot is able to perform the above actions without the machine having to be stopped.

In the context of this patent, a machine for the preparation of pharmaceutical products is defined as any aseptic apparatus, machine or enclosure in which a process of packing, filling, treating, compounding or preparing pharmaceutical or medicinal products is carried out in a sterile and/or clean environment, as well as other types of processes related to said pharmaceutical or medicinal products, without the invention being limited thereto. Preferably, the machine is a machine for the preparation of blood products.

Preferably, the at least two stations are stations chosen from the following stations: container accumulation station, container filling station, container dosing station, container capping station, container encapsulation station, pharmaceutical product preparation station, medicinal product compounding station, container sterilisation station, container cleaning station, container transport station or container refrigeration station.

Preferably, the robot is a robotic arm with at least six degrees of freedom. More preferably, the robot is a robotic arm with at least seven degrees of freedom. Even more preferably, the robot is a robotic arm with more than seven degrees of freedom.

Preferably, the machine comprises a guide, the movement means of the robot also comprising connection means to the guide, the robot being arranged on said guide and being movable along said guide. More preferably, the guide is positioned in the upper portion of the interior of the machine.

Alternatively, the robot movement means comprise an automated guided vehicle (AGV), the robot being positioned on said vehicle. In this alternative embodiment, the robot movement means would be positioned in the lower portion of the apparatus. In other alternative embodiments, the robot may be guided by radiofrequency or by a local positioning system.

Preferably, the robot comprises operating means for elements and equipment positioned inside said machine.

Preferably, the operating means of the robot comprise means for grasping and moving objects. More preferably, the operating means of the robot comprise means for grasping and moving objects inside the machine. Still more preferably, the operating means of the robot comprise means for grasping and moving containers of pharmaceutical products inside the machine.

The robot is able to move fallen containers, with the advantage of being able to position containers from any portion of the preparation line, which comprises at least two stations, directly at an output of the machine. Thus, any human interaction to solve the problem or defect in the machine is avoided.

More preferably, the robot has means for detecting containers that have fallen from the preparation line of the machine, or are obstructing normal operation thereof.

Machines for producing medicinal products comprise a preparation line which comprises at least two stations. Over the length of said preparation line there is a great variety of objects, including containers, more specifically vials, which are dosed and filled with said medicinal product. In addition, machines for producing medicinal products comprise further elements, such as housings, doors, stoppers, screws, etc. In the context of the present invention, the means for grasping and moving objects inside the machine should be understood as means for grasping any type of object, without being limited to containers, screws or stoppers.

Preferably, the robot comprises a device for loading containers into the machine. The device for loading containers allows the robot to move a large number of containers at the same time.

Preferably, the robot comprises container filling means. In other words, the robot comprises means for working on the filling and/or dosing of containers.

Preferably, the robot comprises equipment repair means. More preferably, the equipment-repair means comprise, without being limited to, screwdrivers, welders, means for fixation and other repair means.

Preferably, the robot is programmed to pick up and position containers at an output of the machine. If the robot is not capable of resolving the incident, said robot may pick up each of the vials that are dosed and place said vials at the output of the machine before the operator intervenes directly on the machine. Thus, if an operator has to carry out a manual operation, it is possible, using the robot, to prevent the loss of containers of pharmaceutical product.

Preferably, the robot comprises pre-programmed programs and algorithms. More preferably, said programs comprise automatic maintenance systems, automatic container filling programs, programs for automatically detecting and picking up fallen vials, programming of movements to non-accessible areas of the machine, etc.

Preferably, the robot comprises sensors to prevent impacts with the walls of the apparatus.

Preferably, the control means comprise an interface. More preferably, the control means comprise an interface positioned outside said machine. The robot is controlled via an interface positioned outside the sterile area of the machine so that a user can control the robot without having to access said sterile area, preventing possible contamination of the medicinal products found there.

Preferably, the robot-control means comprise a peripheral. More preferably, the peripheral is a joystick or a virtual reality simulation system, the robot being controlled by said simulation system.

More preferably, the simulation system comprises gloves. The gloves allow the reality inside the machine to be better simulated, giving the operator the sensation of working therein without being in direct contact with the clean area. Preferably, said gloves comprise sensors of a known type. Said gloves are used as a reference complement for the user during control via virtual reality. Said gloves are not used to operate directly inside the clean area.

Preferably, the robot comprises a camera to view the operations and movement of the robot via the interface.

Preferably, the control means are wireless control means.

The present invention also discloses a robot for a machine for the preparation of pharmaceutical products in a sterile environment as described above.

Furthermore, the present invention discloses an interface for controlling a robot for a machine for the preparation of pharmaceutical products in a sterile environment as described above.

In the machine disclosed in the present invention, the robot is able to move so as to be able to access any point inside the machine, allowing incidents, such as known blockages in the machine, to be resolved while avoiding action by the operator inside said machine and thus ensuring acceptable vials that have been dosed are not rejected. Because of the above, human intervention in the problem-solving, repair and equipment-control processes can be eliminated as all the processes and repairs are carried out by a robotic arm, with no direct intervention by the user.

For a better understanding, the accompanying drawings are an explanatory but non-limiting example of an embodiment of the present invention.
Fig. 1 is a perspective view of an embodiment of a machine for the preparation of pharmaceutical products according to the present invention, with the robot positioned at the input of the machine.
Fig. 2 is a view in elevation of the embodiment of the previous figure.
Fig. 3 is a perspective view of the robot of the previous figures.
Fig. 4A and 4B are perspective views of the robot of the previous figures, with the robot articulated in different positions.
Fig. 5 is a view in elevation of the embodiment of the previous figures, with the robot positioned at the output of the machine.
Fig. 6 is a view in elevation of the embodiment of the previous figures, with the robot positioned at the output of the machine, in a different position from that shown in Fig. 5.

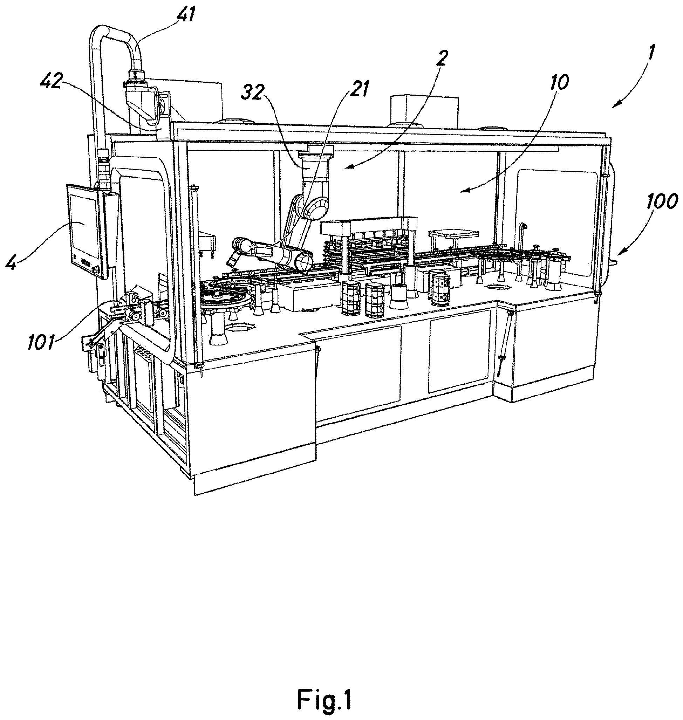

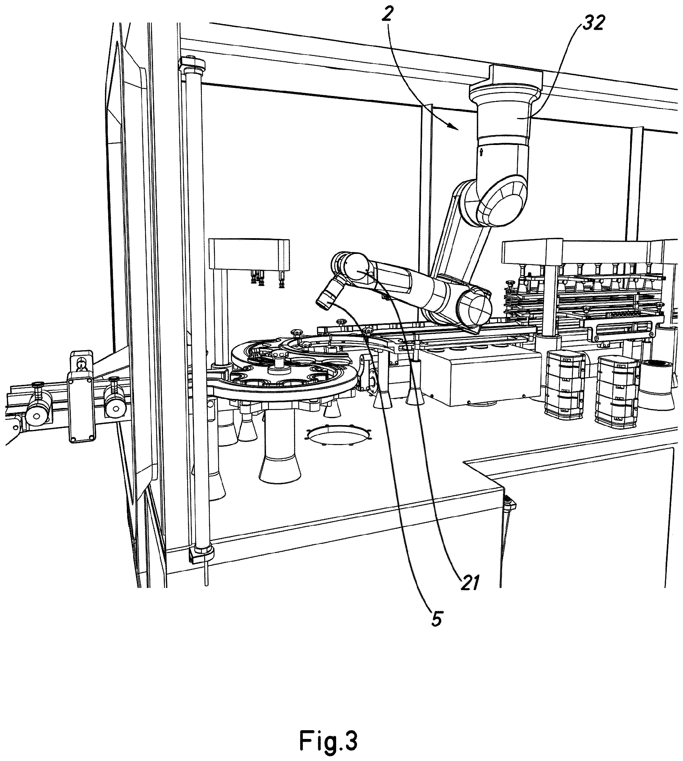

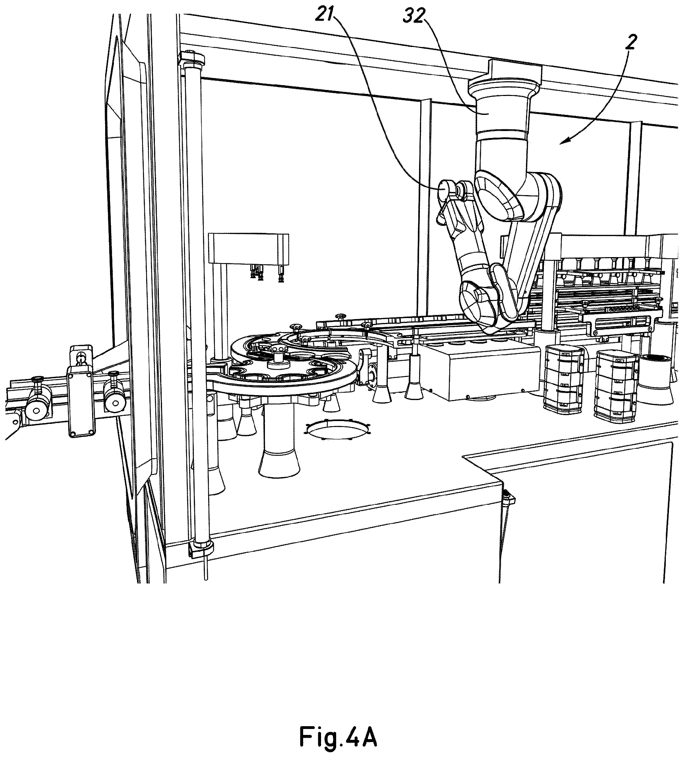

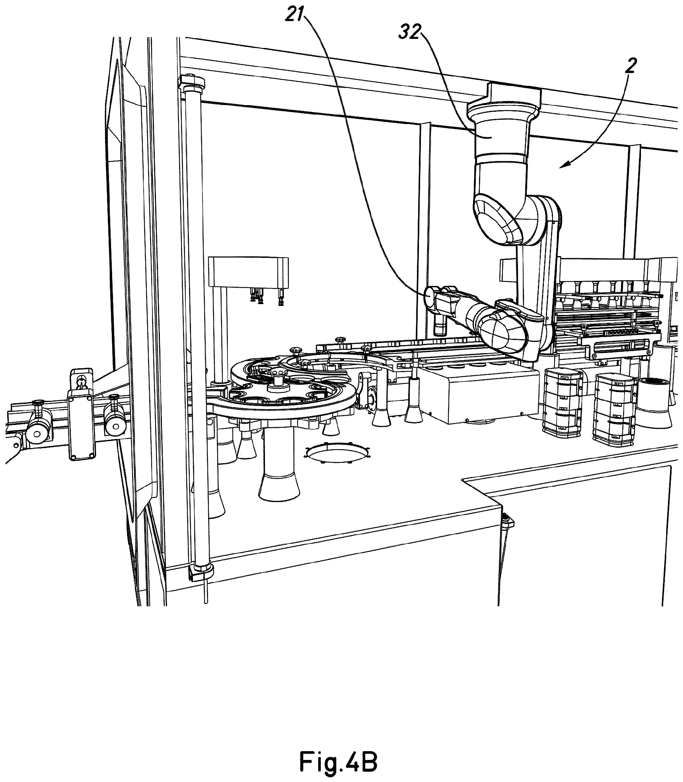

Fig. 1 to 6 show an embodiment of a machine 1 for preparing pharmaceutical products. The machine 1 shown is an aseptic machine, that is, the interior of the machine 1 is a sterile environment or clean area, which is necessary in order to prevent microbial contamination of the pharmaceutical products and of the previously sterilised containers of pharmaceutical products. Said containers may have been sterilised using an autoclave, irradiation or any other applicable technique.

The machine 1 shown comprises a line 10 for preparing and/or producing pharmaceutical products, said line 10 comprising at least two stations and automatic transport means for pharmaceutical product containers between stations, said stations being where the steps comprised in a process for preparing pharmaceutical products are carried out. More specifically, the preparation line 10 of the machine 1 comprises a container accumulation station positioned upstream of the input 101 of the machine 1, a container filling station and/or a container dosing station, and a container capping station at which stoppers or caps are placed on the containers, and also automatic transport means for containers of pharmaceutical products between different stations and between the stations and the input 101 and/or output 100 of the machine. In the embodiment shown, the automatic transport means are a conveyor belt. Moreover, the machine may comprise, for example, a pharmaceutical product preparation station, a product compounding station, a container sterilisation station, a container cleaning station, a container transport station, a container encapsulating station, a container refrigeration station or any other type of station where any step in the preparation of pharmaceutical products is carried out.

Alternatively, the machine 1 for the preparation pharmaceutical products may be any aseptic apparatus, machine or enclosure in which the process of packing, filling, treating, compounding or preparing pharmaceutical or medicinal products is carried out in a sterile and/or clean environment, as well as other types of processes related to said pharmaceutical or medicinal products, without the invention being limited thereto.

The machine 1 comprises, in addition to the preparation line 10, a robot 2. In the embodiment shown, the robot 2 is a robotic arm articulated at various points and having at least six degrees of freedom. The robot 2 also comprises operating means for elements and equipment positioned inside said machine 1. Said operating means for elements and equipment are shown positioned at a distal end 21 of the robot 2.

The robot 2 in the example also has movement means which allow said robot to access all the stations of the line 10 for preparing pharmaceutical products inside the machine 1. The movement means allow the robot with its operating means for elements and equipment to be able to access all the stations inside the machine 1. Finally, the movement means allow the robot 2 to access all the stations of the preparation line 10 in the example, the robot 2 being arranged parallel to the preparation line 10.

In the example in Fig. 1 to 6, the robot 2 comprises various articulations that allow said robot to modify its position in order to be able to access the entire machine. The articulations of the robot 2 comprise rotating segments and ball joints therebetween. Said articulations allow the robot 2 to adjust its position so as to be able to adjust its position in order to be able to carry out operations effectively on all the equipment of the preparation line 10.

The robotic arm allows human intervention in the process of repairing equipment and resolving problems to be eliminated or significantly reduced, also reducing the risk of accident or contamination due to human error and increasing occupational safety for workers, especially given that the liquid dispensed may on occasion be toxic, irritant, etc., and potentially detrimental to health.

The robot 2 comprises operating means for elements and equipment that allow various operations to be carried out at the different stations of the preparation line 10 positioned inside the machine 1 for the preparation of pharmaceutical products.

Among said operating means for elements, the robot 2 has means for grasping and moving objects. More specifically, the robot 2 comprises a hook, a clamp or a system for grasping objects, more specifically containers 5 of pharmaceutical products. Said hook, clamp or grasping system is positioned at a distal end 21 of the robot 2. Moreover, the robot may also comprise a container loading device, and means for filling said containers positioned at the distal end 21 of the robot 2.

Furthermore, the robot 2 comprises equipment repair means, including but not limited to screwdrivers, welders, means for fixation and other repair means.

Thus, the robot 2 may perform various functions inside the machine 1 for the preparation of pharmaceutical products, and is able to work on all the equipment of the stations of the preparation and/or production line inside the machine, and also on the container transport means inside said machine.

The functions of the robot 2 may include, but are not limited to:
- Detecting containers that have fallen during transportation by the transport means inside the machine.
- Picking up fallen containers and then placing said containers in a specially designated space or area, the robot 2 being moved along a movable guide or by movement means of the robot, in order to move to the area where the container that has been picked up is to be placed.
- Filling and/or dosing containers of pharmaceutical products.
- Repairing equipment by screwing, welding, picking up, etc., elements thereof.
- Positioning sterile containers or nozzles from an isolator with rapid transfer ports to a dosing station.
- Putting stoppers on containers.
- Relocating tilted containers, vials and/or stoppers on the preparation line in a correct position.
- Picking up and placing containers at an output of the machine.
- Cleaning portions of the machine or of the equipment of the machine.

If the machine is an isolator with a rapid transfer port, the robotic arm may also be configured to open the rapid transfer port before removing a plurality of nozzles from one of the receptacles thereof, and to remove a plurality of dispensing nozzles from a liquid dispensing position in a rapid transfer port and insert said nozzles in the receptacle and close the rapid transfer port, thus completely eliminating human intervention in the process of preparing the system for carrying out dispensing, carrying out said dispensing and removing the dispensing system when dispensing is complete and/or the useful life thereof is over.

These operations may be controlled by an operator from an interface 4, controlling the movement of the robot 2 in order to access the required area and also controlling the actions of the robot 2 via said interface 4. Alternatively, the operations of the robot 2 may be pre-programmed in said robot.

Therefore, in the event of a fault that the robot is not capable of resolving, the robot is able to pick up each of the containers 5 that are dosed or filled and place said containers at the output of the machine before the operator intervenes directly on the machine 1, eliminating the need to throw away correctly prepared containers 5 due to a lack of sterility, and only throwing away those containers 5 that have not yet been prepared.

In the example in Fig. 1 to 6, the machine 3 comprises a guide 3 positioned in the upper portion of the interior of the machine 1. The robot 2 of the machine 1 is movable along the guide 3, by means of the connection means 31 to the guide. Alternatively, the guide 3 may be arranged in the lower portion of the interior of the machine 1.

The connection means 31 of the robot 2 to the guide 3 are connections of a known type and may be, but are not limited to, connection means such as rails, a tongue and groove assembly, a magnetic connection, etc.

Moreover, the robot 2 comprises an additional rotating element 32 positioned in the connection means 31 of the robot 2 to the guide 3.

An advantage of the machine 1 comprising a guide 3, and of the movement means of the robot 2 comprising connection means 31 to the guide 3 is that the robot 2 is not a fixed robot, and is able to move along the guide 3 being able to act on all the stations of an aseptic preparation and/or production line positioned inside a machine 1. Thus, there is no need for more than one robot to be present. In other words, the robot 2 is able to move so as to be able to carry out actions on all the stations of the machine 1. Furthermore, and owing to the mobility thereof along the entire preparation line, the robot 2 is able to work parallel to the movement of the containers 5 positioned on the automatic transportation means for containers of pharmaceutical products of the machine, allowing problems or faults inside the machine 1 to be resolved without having to stop the production process.

The robot 2 control means of the machine 1 in the embodiment shown in the figures comprise an interface 4 positioned on the outer portion of the machine 1, outside the clean or sterile area. The robot 2 is controlled and directed by an external user or operator via said interface 4.

The interface 4 is positioned on a support 41 connected to the machine 1 by connection means 42.

Control of the robot 2 via the interface allows all or most of the manual operations carried out on known machines using gloves from isolators to be replaced by a control directed via an interface. Moreover, the interface allows the operation of the robotic arm to be monitored.

In addition, the robot 2 control means also comprise a peripheral device. Said peripheral (not shown in the figures) may be, for example, a joystick, a virtual reality system or any other type of peripheral, such as a keyboard. Alternatively, the interface 4 may comprise a touch screen.

The use of a joystick as a peripheral allows the user controlling the interface 4 to simulate the movements of the robot more realistically, allowing control of said robot the same way as if said user were actually inside the machine 1.

The robot 2 control means may also comprise a virtual reality system. Said virtual reality systems allow the user to view the position of the robot in a virtual environment, allowing the user better control of said robot 2. Working with virtual reality allows more accurate control of the robot by the user, effectively simulating the user working inside the machine while in reality being positioned outside said machine. This virtual reality system may be additional to other peripherals and may be used in combination with a joystick, a keyboard or gloves. An advantage of using gloves in combination with a virtual reality system is that said gloves allow better simulation of the interaction of the robot with the equipment, areas and stations inside the machine on which an action must be carried out, especially for users accustomed to carrying out operations on a machine for preparation of pharmaceutical products machine using gloves positioned on one side of the machine, compared with control via an interface.

Alternatively, the robot 2 control means may be wireless control means.

The control of the robot 2 is preferably a control by a joystick, so that the movement of the robot 2 inside the machine is controlled precisely. Alternatively, the robot 2 control means may be programmed so as to delimit areas of the machine 1 as inaccessible. Thus, although the movement means of the robot 2 (which comprise connection means 31 of the robot 2 to the guide 3 and the degrees of freedom thereof) allow the robot 2 to move such that the distal end 21 thereof is able to access the interior of the machine 1 in its entirety, some areas of the machine, such as an interior portion of an item of equipment, may be protected from possible interaction with the robot 2. Thus, control of the most sensitive portions of the interior of the machine 1 is maintained and the robot 2 is prevented from being able to cause an unexpected accident or damage due to human error when controlling the robot 2 via the interface or other means for controlling the robot 2. Said areas may be pre-programmed in the robot 2, either by a system of coordinates, a set of sensors, preferably position sensors installed in the robot, or other known systems.

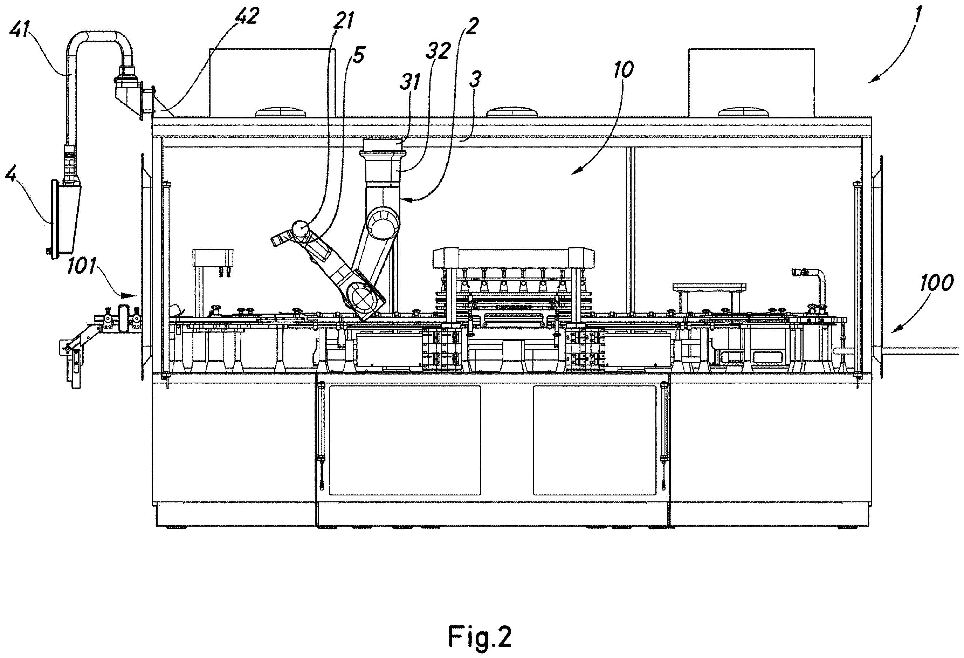

Fig. 2 to 6 show the robot 2 of the embodiment of the present invention, in various different positions inside the machine 1 owing to the movement means of said robot 2, showing its actuation on the preparation line 10 in its entirety inside the machine 1.

Fig. 2, 3, 4A and 4B show the robot 2, which is a robotic arm, loading a container 5 using the operating means of elements and equipment of said robot 2, more specifically using the grasping means positioned at the distal end 21 thereof. In these figures, the articulations of the robot 2 and the degrees of freedom thereof allow said robot to be positioned such that the distal end 21 is able to access all portions of the machine.

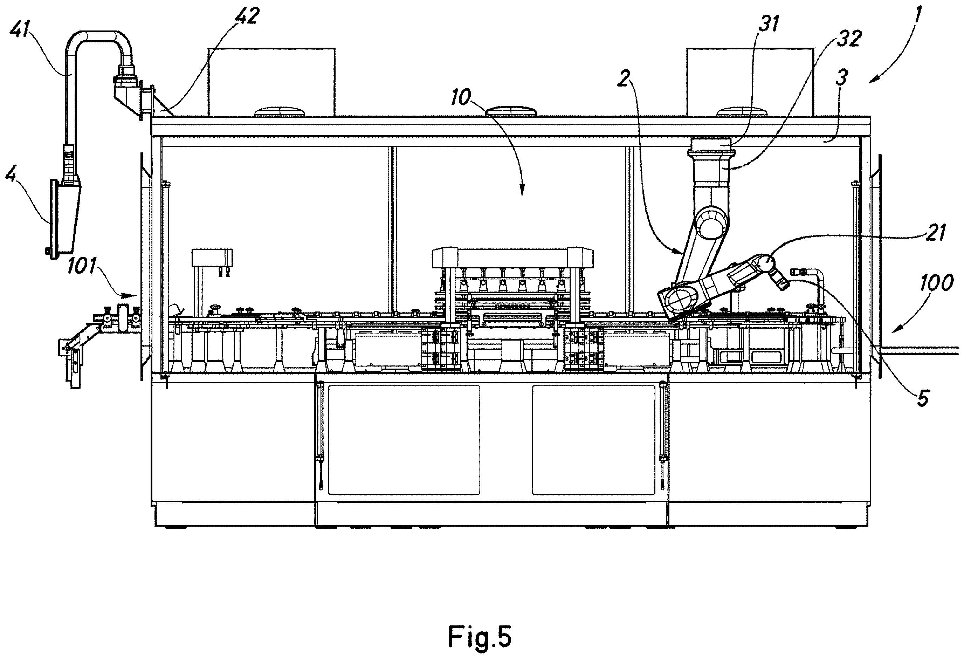

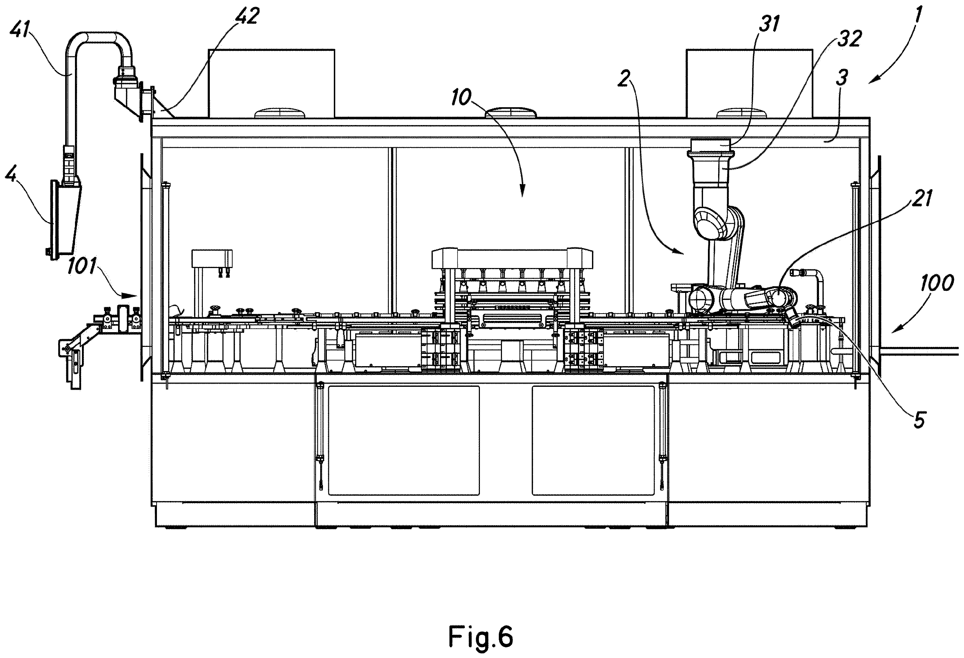

Fig. 5 and 6 show the robot 2 in a different position from that shown in Fig. 2, 3, 4A and 4B, having been moved by means of the guide 3, this position being closer to the output 100 of the machine 1. As in the previous figures, the robot 2 is shown articulated differently in Fig. 6 and Fig. 5 owing to the degrees of freedom thereof.

Although the invention has been described and illustrated on the basis of representative examples, it should be understood that said exemplary embodiment in no way limits the present invention, and therefore any variants included directly or by equivalence in the content of the accompanying claims should be considered included within the scope of the present invention.

## Claims

1. Machine for the preparation of pharmaceutical products in a sterile environment, said machine comprising at least two stations of a line for preparing pharmaceutical products and automatic transport means for containers of pharmaceutical products, **characterized in that** the machine comprises a robot positioned inside the machine and robot control means, said robot being a robotic arm which comprises movement means for accessing the stations of the machine.

2. Machine according to any one of the preceding claims, **characterized in that** the robot comprises operating means for elements and equipment positioned inside said machine.

3. Machine according to either of the preceding claims, **characterized in that** the robot has at least six degrees of freedom.

4. Machine according to any one of the preceding claims, **characterized in that** it comprises a guide, the movement means of the robot also comprising connection means to the guide, the robot being arranged on said guide and being movable along said guide.

5. Machine according to the preceding claim, **characterized in that** the guide is positioned in the upper portion of the interior of the machine.

6. Machine according to any one of claims 2 to 5, **characterized in that** the operating means of the robot comprise means for grasping and moving objects.

7. Machine according to any one of the preceding claims, **characterized in that** the robot comprises container filing means.

8. Machine according to any one of the preceding claims, **characterized in that** the robot comprises equipment repair means.

9. Machine according to any one of the preceding claims, **characterized in that** the robot comprises pre-programmed programs and algorithms.

10. Machine according to any one of the preceding claims, **characterized in that** the robot control means comprise an interface positioned outside the machine.

11. Machine according to any one of the preceding claims, **characterized in that** the robot control means comprise a peripheral.

12. Machine according to the preceding claim, **characterized in that** the peripheral is a joystick or a virtual reality simulation system.

13. Machine according to any one of the preceding claims, **characterized in that** the at least two stations are stations chosen from the following stations: container accumulation station, container filling station, container dosing station, container capping station, container encapsulation station, pharmaceutical product preparation station, medicinal product compounding station, container sterilisation station, container cleaning station, container transport station or container refrigeration station.

14. Robot for a machine for the preparation of pharmaceutical products in a sterile environment according to any one of the preceding claims.

15. Interface for controlling a robot for a machine for the preparation of pharmaceutical products in a sterile environment according to any one of claims 1 to 13.
